Europäisches Patentamt

European Patent Office

Office européen des brevets

(11) Veröffentlichungsnummer: **0 256 252**
**A1**

## (12) EUROPÄISCHE PATENTANMELDUNG

(21) Anmeldenummer: 87108929.8

(22) Anmeldetag: 23.06.87

(51) Int. Cl.⁴: **C08G 18/14 , C08G 18/50**

(30) Priorität: 04.07.86 DE 3622594
29.08.86 DE 3629390

(43) Veröffentlichungstag der Anmeldung:
24.02.88 Patentblatt 88/08

(84) Benannte Vertragsstaaten:
**AT BE CH DE FR GB IT LI NL SE**

(71) Anmelder: **BAYER AG**
**Konzernverwaltung RP Patentabteilung**
**D-5090 Leverkusen 1 Bayerwerk(DE)**

(72) Erfinder: **Adam, Norbert, Dr.**
**An der Ruthen 6**
**D-5000 Köln 80(DE)**
Erfinder: **Kaufung, Reinhard, Dr.**
**Heymannstrasse 34**
**D-5090 Leverkusen(DE)**
Erfinder: **Wiedermann, Rolf, Dr.**
**Wiesenstrasse 18**
**D-5068 Odenthal(DE)**

(54) **Polyolkomposition und ihre Verwendung zur Herstellung von flammwidrigen Polyurethanschaumstoffen.**

(57) Es wird eine Polyolkomposition auf Basis von

a) mindestens 10, bevorzugt 10 bis 49 Gew.-% Alkylenoxid-Polyethern mit OH-Zahlen von 400 bis 520, die durch Addition von Alkylenoxiden, bevorzugt Ethylenoxid und Propylenoxid, an 2,3-und/oder 3,4-Toluylendiamin erhalten worden sind,

b) 20 bis 46 Gew.-% Phosphor-und/oder Halogen-haltigen Flammschutzmitteln,

c) 5 bis 10 Gew.-% eines mindestens zwei aktive H-Atome aufweisenden Kettenverlängerungsmittels/Vernetzungsmittels,

d) an oberflächenaktiven Mitteln,

e) Wasser

f) 0 bis 30 Gew.-% von weiteren Polyhydroxylverbindungen des Molekulargewichts 300 bis 10 000, beansprucht.

Erfindungsgegenstand ist auch die Verwendung dieser Polyolkomposition zur Herstellung von flammwidrigen Polyurethan-Schaumstoffen mit sehr niedriger Wärmeleitfähigkeit und guter Zähigkeit, vorzugsweise unter Verwendung von Trichlor-trifluor-ethan als Treibmittel.

EP 0 256 252 A1

### Polyolkomposition und ihre Verwendung zur Herstellung von flammwidrigen Polyurethan-schaumstoffen

Es wird eine Polyolkomposition auf Basis von

a) mindestens 10, bevorzugt 10 bis 49 Gew.-% Alkylenoxid-Polyethern mit OH-Zahlen von 400 bis 520, die durch Addition von Alkylenoxiden, bevorzugt Ethylenoxid und Propylenoxid, an 2,3-und/oder 3,4-Toluylendiamin erhalten worden sind,

b) 20 bis 46 Gew.-% Phosphor-und/oder Halogen-haltigen Flammschutzmitteln,

c) 5 bis 10 Gew.-% eines mindestens zwei aktive H-Atome aufweisenden Kettenverlängerungsmittels/Vernetzungsmittels,

d) an oberflächenaktiven Mitteln,

e) Wasser

f) 0 bis 30 Gew.-%, bevorzugt 0 bis 25,89 Gew.-% von weiteren Polyhydroxylverbindungen des Molekulargewichts 300 bis 10 000, beansprucht.

Erfindungsgegenstand ist auch die Verwendung dieser Polyolkomposition zur Herstellung von flammwidrigen Polyurethan-Schaumstoffen mit sehr niedriger Wärmeleitfähigkeit und guter Zähigkeit, vorzugsweise unter Verwendung von Trichlor-trifluor-ethan als Treibmittel.

Harte Polyurethanschaumstoffe werden bekanntlich oft als Dämmstoffe zur Isolierung gegen Wärme oder Kälte eingesetzt. Große Dämmstoffdicken, wie sie zunehmend in den Bauordnungen vieler Länder verlangt werden, schaffen viele neue technische Probleme im Hochbau.

Gefordert werden daher Isolationsmaterialien, die

1. einen möglichst niedrigen Wert der Wärmeleitfähigkeit und gleichzeitig aber

2. eine gute Flammwidrigkeit aufweisen.

Polyurethan-Schaumstoffe weisen bereits sehr niedrige Wärmeleitfähigkeitswerte auf, es ist aber bekannt, daß der Einsatz bestimmter Polyole oder Zusatzmittel besonders niedrige Werte ergeben. Schaumstoffe, die diesen Anforderungen entsprechen, sind in der deutschen Patentanmeldung P 3 509 959 beschrieben.

Überraschend wurde nun gefunden, daß der Austausch der dort beanspruchten 2,4-und/oder 2,6-Toluylendiamin-Polyether durch 2,3-und/oder 3,4-TDA-Polyether eine nicht vorhersehbare weitere Verbesserung hinsichtlich der Wärmeleitfähigkeit bringt.

Die Verwendung von 2,3-und/oder 3,4-Toluylendiamin-(TDA)-Polyethern ist bereits beschrieben worden. So wurde in DE-OS 20 17 038 und US-Patent 4 209 609, US-Patent 4 421 871, US-Patent 4 397 966, US-Patent 4 562 290 und US-Patent 4 469 822 die Verwendung von derartigen Polyethern zur Herstellung von flammwidrigen PUR-Hartschaumstoffen vorgeschlagen.

Die Herstellung von technisch verwertbaren Hartschaumstoffen der Brandklasse B2 ist allerdings durch diese Lehren nicht nahegelegt. In US-Patent 4 410 641 wird die Verwendung von Polyetherpolyolen auch auf der Basis von 2,3-und/oder 3,4-TDA für flammwidrige Hartschaumstoffe vorgeschlagen. Allerdings wird hier ein Kennzahlbereich von 150 bis 500 beansprucht, in diesem Bereich entstehen aber sprödharte Schaumstoffe, die für den praktischen Bereich oft nicht geeignet sind.

Dagegen können nach der Lehre der vorliegenden Erfindung flammwidrige Polyurethanschaumstoffe hergestellt werden, die bei sehr niedrigen Werten der Wärmeleitfähigkeit gleichzeitig eine hervorragende Zähigkeit aufweisen.

Beansprucht wird daher eine Polyolkomposition, enthaltend

a) mindestens 10 Gew.-%, bevorzugt 10 bis 49 Gew.-%, insbesondere 15 bis 40 Gew.-%, eines mindestens zwei Hydroxylgruppen aufweisenden Polyethers mit einer OH-Zahl von 400 bis 520, der durch Addition von Alkylenoxiden an 2,3-und/oder 3,4-Toluylendiamin erhalten worden ist,

b) mindestens 20 Gew.-%, vorzugsweise 20 bis 46 Gew.-% von Phosphor-und/oder Halogen-haltigen einbaufähigen und/oder nicht einbaufähigen Flammschutzmitteln,

c) 5 bis 10 Gew.-% eines mindestens zwei Zerewitinoffaktive Wasserstoffatome aufweisenden Kettenverlängerungs-/Vernetzungsmittel vom Molekulargewicht 32 bis 299,

d) 0,1 bis 2,0 Gew.-% an oberflächenaktiven Mitteln,

e) 0 bis 2 Gew.-%, vorzugsweise 0,01 bis 2 Gew.-%, Wasser und

f) 0 bis 30 Gew.-%, vorzugsweise 0 bis 25,89 Gew.-%, von weiteren, höhermolekularen Polyhydroxylverbindungen des Molekulargewichts 300 bis 10 000, vorzugsweise 356 - 10.000, oder auch 400 bis 10.000; insbesondere mindestens trifunktionelle höhermolekulare Polyhydroxylverbindungen vom Molekulargewicht 356 - 1.000.

Die Gewichtsteile an a) - f) sind jeweils für die Polyolkomposition so auszuwählen, daß sie sich zu 100 Gew.-% ergänzen (innerhalb der jeweils angegebenen Grenzen für a) - f)).

Es hat sich herausgestellt, daß erfindungsgemäß verwendete Polyetherpolyole auf der Basis von 2,3- bzw. 3,4-TDA ("ortho-TDA" oder "vic"-TDA) unter Verwendung von Mischungen von Ethylenoxid und Propylenoxid als Alkylenoxide besonders niedrige $\lambda$-Werte zeigen. Bevorzugt werden dabei 10 bis 90 % Ethylenoxid, insbesondere 20 bis 80 % Ethylkenoxid und 90 bis 10 %, bevorzugt 80 bis 20 % Propylenoxid als Alkylenoxide. Als "vic-TDA" werden dabei die reinen Isomeren oder ihre Gemische, bevorzugt mit 20 bis 80 Gew.-% 2,3-TDA und 80 bis 200 Gew.-% 3,4-TDA, eingesetzt.

Bei Hydroxylzahlen der Polyetherpolyole von kleiner 400 entsprechend der erfindungsgemäß beanspruchten Zusammensetzung wird sowohl das Brandverhalten wie die Aushärtung weniger günstig. Als bevorzugt beansprucht werden daher Polyetherpolyole a) mit OH-Zahlen zwischen 410 und 520, insbesondere zwischen 450 und 500.

Die erfindungsgemäß beanspruchten Polyolkompositionen werden zur Herstellung von flammwidrigen Hartschaumstoffen verwendet, die der Baustoffklasse B2 nach DIN 4102 entsprechen. Die erfindungsgemäßen Hartschaumstoffe weisen besonders niedrige Werte für die Wärmeleitfähigkeit auf, wenn als Treibmittel Trichlor-trifluor-ethan allein oder in Abmischung mit anderen Treibmitteln verwendet wird.

Bestimmte Füllstoffe, wie Ruß und/oder Aluminiumpulver reduzieren im erfindungsgemäßen System ebenfalls die Wärmeleitfähigkeit zusätzlich und werden daher als Füllstoffe bevorzugt.

Den erfindungsgemäß zusammengesetzten Polyolkompositionen können auch noch Verschäumungskatalysatoren, Farbpasten, Farbstoffe, Antioxidantien und/oder andere übliche Zusatzstoffe in üblichen Mengen zugemischt werden.

Das Polyetherpolyol a) der beanspruchten Polyolkomposition wird in an sich bekannter Weise durch Anlagerung von Alkylenoxiden an 2,3-und/oder 3,4-Toluylendiamine hergestellt. Es weist in der Regel ein Molekulargewicht von 400 bis 550 und eine OH-Zahl von 410 bis 520 auf.

Die Komponente b) der Polyol-Komposition stellt ein Phosphor-und/oder Halogen-haltiges Flammschutzmittel dar, das einbaufähig oder nicht einbaufähig sein kann. Vorzugsweise sind es nicht einbaufähige Flammschutzmittel. Es wird bevorzugt in einer Menge von 25 bis 45 Gew.-% in der Polyol-Komposition verwendet.

Beispiele für nicht einbaufähige Flammschutzmittel sind: Halogenflammschutzmittel als chlorierte und/oder bromierte Verbindungen mit insbesondere 50 bis 88 Gew.-% Halogen, z.B. Dechlorane® 604 bzw. Dechlorane® 510 der Hooker Chemicals, Niagara Falls/USA. Bevorzugt sind bromierte Aromaten, z.B. Pentabromtoluol, Hexabrombenzol, besonders aber wenig flüchtige aromatische Brom verbindungen wie Tetrabrom-4,4-dihydroxyphenyl-dimethylmethan, bromierte Diphenylether mit ca. 67 bis 71 Gew.-% Brom und mit Pentabromdiphenylether als Hauptbestandteil im Gemisch, höher bromierte Diphenylether wie Decabromdiphenylether, 82 bis 83 Gew.-% Brom, bromierte Polyphenylether, wobei der Pentabromdiphenylether besonders bevorzugt ist. Geeignete phosphorhaltige Flammschutzmittel sind Phosphorsäuretrisester, z.B. aliphatische Phosphate wie Trioctylphosphat, Tridodecylphosphat, araliphatische Phosphorester wie Di-phenyl-dodecylphosphat, aber bevorzugt aromatische Phosphate wie Triphenylphosphat, wobei Di-phenyl-kresylphosphat bevorzugt ist.

Die Komponente c) der Polyol-Komposition besteht aus an sich bekannten Verbindungen mit mindestens zwei, gegenüber Isocyanaten reaktionsfähigen Wasserstoffatomen und einem Molekulargewicht von 32 bis 299. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Vernetzungsmittel dienen. Diese Verbindungen weisen in der Regel 2 bis 8, vorzugsweise 2 bis 4, gegenüber Isocyanaten reaktionsfähige Wasserstoffatome auf.

Als Beispiele für derartige Verbindungen seien genannt:

Ethylenglykol, Propandiol-(1,2) und -(1,3), Butandiol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-PS 3 723 392), Glycerin (besonders bevorzugt), Trimethylolpropan, Hexantriol-(1,2,6), Trimethylolethan, Pentaerythrit, Chinit, Mannit und Sorbit, Ricinusöl, 2,3-Dibrom-2-butendiol-1,4, Diethylenglykol, Triethylenglykol, Tetraethylenglykol, höhere Polyethylenglykole mit einem Molekulargewicht bis 299, Dipropylenglykol, höhere Polypropylenglykole mit einem Molekulargewicht bis 299, Dibutylenglykol, höher Polybutylenglykole mit einem Molekulargewicht bis 299, 4,4-Dihydroxy-diphenylpropan, Ethanolamin, Diethanolamin, N-Methyldiethanolamin, Triethanolamin und 3-Aminopropanol.

Komponente d) der Polyol-Komposition besteht aus oberflächenaktiven Mitteln, wie Emulgatoren und Schaumstabilisatoren. Als Emulgatoren kommen z.B. die Natriumsalze von Ricinusöl-sulfonaten oder Salze von Fettsäuren mit Aminen wie ölsaures Diethylamin oder stearinsaures Diethanolamin in Frage. Auch Alkali-oder Ammoniumsalze von Sulfonsäuren wie etwa von Dodecylbenzolsulfonsäure oder Dinaphthylmethandisulfonsäure oder von Fettsäuren wie Ricinolsäure oder von polymeren Fettsäuren können als oberflächenaktive Zusatzstoffe verwendet werden.

Als Schaumstabilisatoren kommen vor allem Polyethersiloxane, speziell wasserlösliche Vertreter in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind beispielsweise in den US-Patentschriften 2 834 748, 2 917 480 und 3 629 308 be schrieben. Von besonderem Interesse sind erfindungsgemäß jedoch siliconfreie oberflächenaktive Mittel.

Die gegebenenfalls in der Polyol-Komposition enthaltenen weiteren Hydroxylgruppen aufweisenden Verbindungen vom Molekulargewicht 300 bis 10 000 (Komponente f) sind unterschiedlich von der Komponente a). Es handelt sich hierbei z.B. um die an sich bekannten, mindestens zwei, vorzugsweise mehr als drei Hydroxylgruppen aufweisenden Polyether und Polyester. Sie sind dem Fachmann wohl bekannt. Beispielsweise sind sie in der DE-A 28 32 253, Seite 11 bis 18, aufgeführt.

Besonders bevorzugt sind mindestens trifunktionelle Polyetherpolyole, z.B. tetrafunktionelle Polyetherpolyole, vom Molekulargewicht 356 - 1.000. Beispiele sind Additionsprodukte von Ethylenoxid und/oder Propylenoxid an Triole, Tetrole, Pentole, Hexole oder Zucker oder an Polyamine mit primären und/oder sekundären Aminogruppen und gegebenenfalls zusätzlich tertiären Aminogruppen. Die tertiäre Aminogruppen enthaltenden Additionsprodukte an die genannten Polyamine, besonders an aliphatische oder cycloaliphatische Polyamine wie Ethylendiamin, sind besonders bevorzugt.

Die Herstellung von Polyurethan-Schaumstoffen unter Verwendung der erfindungsgemäßen Polyol-Komposition erfolgt nach dem an sich bekannten Einstufenverfahren, dem Prepolymerverfahren oder dem Semiprepolymerverfahren, wobei man sich oft maschineller Einrichtungen bedient, z.B. solcher, die in der US-Patentschrift 2 764 565 beschrie ben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München, 1966, z.B. auf den Seiten 121 bis 205, beschrieben.

Dabei wird die Polyol-Komposition mit Polyisocyanaten und gegebenenfalls Zusatzmitteln in an sich bekannter Weise so umgesetzt, daß harte Polyurethan-Schaumstoffe mit einem Raumgewicht bis 70 kg/m³, bevorzugt bis 45 kg/m³ erhalten werden, wobei Schaumstoffe von ≥30 kg/m³ (entsprechend der Norm) bevorzugt sind. Dabei werden Schaumstoffe mit Raumgewichten von 30 - 45 kg/m³ vorzugsweise für kontinuierlich hergestellte Dämmplatten, solche mit höheren Raumgewichten, insbesondere 60 ± 10 kg/m³ für Dachspritzschaum-Systeme eingesetzt. Erfahrungsgemäß steigt die Wärmeleitfähigkeit (λ-Wert) von Schaumstoffen mit zunehmendem Raumgewicht an. Polyetherpolyole auf Basis EO/PO-Mischalkoxylierungsprodukten ergeben dabei jeweils günstigere Werte als solche auf PO (Propylenoxid)-Alkylierung alleine.

Als Polyisocyanate werden in der Regel die technisch leicht zugänglichen Polyisocyanate, z.B. Polyphenylpolymethylenpolyisocyanate, wie es durch Anilin-Formaldehyd-Kondensation und anschließende Phosgenierung hergestellt werden ("rohes MDI") sowie deren Gemische mit 2,4-und/oder 2,6-Toluylendiisocyanat, ferner "modifizierte Polyisocyanate", modifiziert z.B. durch Carbodiimidgruppen, Urethangruppen, Allophanatgruppen, Isocyanatgruppen, Harnstoffgruppen oder Biuretgruppen, insbeson dere solche modifizierten Polyisocyanate, die sich vom 2,4-und/oder 2,6-Toluylendiisocyanat bzw. vom 4,4-und/oder 2,4-Diphenylmethandiisocyanat ableiten, bevorzugt. Es können jedoch auch andere, für das Polyisocyanatadditionsverfahren beschriebene Polyisocyanate eingesetzt werden.

Die erfindungsgemäße Polyol-Komposition enthält Wasser, das als Treibmittel wirkt. Zusätzlich werden beim Verschäumungsvorgang organische Treibmittel wie halogensubstituierte Alkane, z.B. Methylenchlorid, Chloroform, Ethylidenchlorid, Vinylidenchlorid, Monofluortrichlormethan, Chlordifluormethan, Dichlordifluormethan in der Regel in einer Menge von 10 bis 50 Gew.-%, bezogen auf das Polyolgemisch, mitverwendet.

Ein besonders bevorzugtes Treibmittel ist Trichlortrifluorethan. Weitere Beispiele für evtl. mitzuverwendende Treibmittel sowie Einzelheiten über die Verwendung von Treibmittel sind im Kunststoff-Handbuch, Band VII, herausgegeben von Vieweg und Höchtlen, Carl-Hanser-Verlag, München 1966, z.B. auf den Seiten 108 und 109, 453 bis 455 und 507 bis 510 beschrieben.

Bei der Schaumstoff-Herstellung können auch die an sich bekannten Katalysatoren, ferner Stabilisatoren gegen Alterung und Witterung, Weichmacher und fungistatisch und bakteriostatisch wirkende Substanzen, farbgebende Stoffe sowie Füllstoffe wie Bariumsulfat, Aluminiumhydroxid (2 bis 40 μm), z.B. Martinal® B2 der Martinswerk GmbH, Bergheim/Erft, $Sb_2O_3$, Kieselgur oder Schlämmkreide mitverwendet werden. Besonders bevorzugt sind Ruß und Aluminiumpulver, da hierdurch niedrigere λ-Werte als ohne diese Zusätze erhalten werden. Diese zusätzlichen Stoffe können dem erfindungsgemäß zusammengesetzten Polyolgemisch in üblichen Mengen zugemischt werden.

Vertreter von erfindungsgemäß in Frage kommenden Katalysatoren sowie Einzelheiten über die Wirkungsweise der Katalysatoren sind beispielsweise im Kunststoff-Handbuch, Band VII, herausgegeben von Vieweg und Höchtlen, Carl-Hanser-Verlag, München 1966, z.B. auf den Seiten 96 bis 102 und ausführlich in der Patentliteratur beschrieben.

Die Katalysatoren werden in der Regel in einer Menge zwischen etwa 0,001 und 10 Gew.-%, vorzugsweise 0,01 -2,5 Gew.-%, bezogen auf die Polyol-Komposition, eingesetzt.

Bei der Schaumstoff-Herstellung gemäß Erfindung wird in der Regel bei Kennzahlen zwischen 105 und 145 gearbeitet, bevorzugt bei 116 bis 145, da bei den genannten höheren Kennzahlen das Brandverhalten verbessert wird, jedoch noch keine Versprödung der Schaumstoffe eintritt.

<u>Beispiele</u>

In an sich bekannter Weise wurden auf einer handelsüblichen Doppeltransportband-Anlage (DTB-Anlage) durch maschinelles Vermischen der Komponenten Polyurethan-Hartschaumplatten hergestellt und bezüglich ihres Brandverhaltens und ihrer Wärmeleitfähigkeit geprüft (vgl. Tabelle).

Vergleichsbeispiele 1, 6 und 9 sind nicht erfindungsgemäß. Der Vergleich von Beispiel 3 mit Vergleichsbeispiel 1 zeigt, daß vic.-TDA-Polyether (vic.-TDA = 2,3 und/oder 3,4-Toluylendiamin) im Vergleich zu TDA-80/20-Polyether (TDA-80/20 = 80 Gew.-% 2,4-und 20 % 2,6-Toluylendiamin.) (beide Polyether auf Basis einer EO/PO-Alkoxylierung) einen niedrigeren λ-Wert bringt.

Der Vergleich von Beispiel 4 und 5 bringt den Beweis, daß ein Zusatz von Ruß den λ-Wert verbessert.

Beispiel 2 zeigt, daß Polyether mit nur PO als Alkylenoxid in der Polyetherkette relativ weniger günstigere λ-Werte als die bevorzugten EO/PO-Mischether ergeben.

Die besseren Eigenschaften eines Schaumstoffes mit einem Polyol in dem erfindungsgemäß bevorzugten OH-Zahlbereich 410 bis 550 zeigt Beispiel 7 gegen 6, die Brandeigenschaften sind besser als bei Polyethern mit niedrigerer OH-Zahl.

Die größere Zähigkeit der erfindungsgemäßen Schaumstoffe zeigt Beispiel 7, hier wird nur ein Abrieb von 1,3 % erhalten, während Schaumstoffe nach US-Pat. 4.410.641, Beispiel 1 bis 31, höhere Abriebwerte aufweisen.

Der Vergleich von Beispiel 4 und 8 beweist, daß die Verwendung von Trichlor-trifluorethan den λ-Wert besonders erniedrigt.

Vergleichsbeispiel 9 zeigt, daß nicht nur der vic.-TDA-Polyether einen Einfluß auf den λ-Wert hat, sondern auch die Flammschutzmittelmenge.

0 256 252

Beispiele
Tabelle 1

| | Vergleichsbeispiel 1 | Bsp. 2 | Bsp. 3 | Bsp. 4 | Bsp. 5 | Vergleichsbeispiel 6 | Bsp. 7 | Bsp. 8 | Vergleichsbeispiel 9 | erfindungsgemäße Komponente |
|---|---|---|---|---|---|---|---|---|---|---|
| Zucker-Propylenglykol-Propylenoxid-Polyether, OHZ 470 | - | - | - | - | - | - | - | - | 40 | (f') |
| TDA-80/20[1)]-EO-PO-Polyether, OHZ 470 | 30 | - | - | - | - | - | - | - | - | (f') |
| Ethylendiamin-PO-Polyether, OHZ 630 | 15 | 20 | 15 | 15 | 15 | 15 | 15 | 15 | 10 | f) |
| vicinal-TDA[2)]-EO-PO-Polyether, OHZ 470[3)] | - | - | 30 | 30 | 30 | - | 30 | 30 | 30 | a) |
| vicinal-TDA[2)]-PO-Polyether, OHZ 400 | - | 26 | - | - | - | - | - | - | - | a) |
| vicinal-TDA-EO-PO-Polyether, OHZ 380[4)] | - | - | - | - | - | 30 | - | - | - | (f') |
| Glycerin | 9 | 10 | 9 | 9 | 9 | 9 | 9 | 9 | 10 | c) |
| Dimethyl-N,N-bis-(hydroxypropyl)-aminomethylphosphonat | 9 | 10 | 9 | 9 | 9 | 9 | 9 | 9 | - | b) |
| Dibrombutendiol-Epichlorhydrin-Polyether (OHZ 330; 32 % Br; 6,8 % Cl) | 20 | 20 | 20 | 20 | 20 | 20 | 20 | 20 | - | b) |
| Trichlorethylphosphat | 15 | 12 | 15 | 15 | 15 | 15 | 15 | 15 | 10 | b) |
| Siliconstabilisator | 1,4 | 1,4 | 1,4 | 1,4 | 1,4 | 1,4 | 1,4 | 1,4 | 1,4 | d) |
| Wasser | 0,6 | 0,6 | 0,6 | 0,6 | 0,6 | 0,6 | 0,6 | 0,6 | 0,7 | e) |
| Trichlorfluormethan | 32 | 33 | 33 | 33 | 33 | 33 | 33 | 20 | 31 | - |
| Trichlortrifluorethan | - | - | - | - | - | - | - | 20 | - | - |

**Tabelle 1 (Fortsetzung)**

| | Vergleichs-beispiel 1 | Bsp. 2 | Bsp. 3 | Bsp. 4 | Bsp. 5 | Vergleichs-beispiel 6 | Bsp. 7 | Bsp. 8 | Vergleichs-beispiel 9 |
|---|---|---|---|---|---|---|---|---|---|
| Dimethylcyclohexylamin | 1,4 | 1,6 | 1,1 | 1,2 | 1,2 | 1,2 | 1,2 | 1,6 | 2,0 |
| Schwarzpaste | - | - | - | - | 1 | - | - | - | - |
| "rohes MDI" mit ca. 48 % 2,4'- und 4,4'-Diphenyl-methandiisocyanat | 144 | 149 | 150 | 150 | 150 | 150 | 150 | 150 | 143 |
| Kennzahl | 110 | 110 | 110 | 110 | 110 | 110 | 110 | 110 | 110 |
| Abbindezeit (DTB-Anlage) | 35 | 34 | 32 | 30 | 30 | Handverschäumung | | 30 | 27 |
| Brandverhalten DIN 4102 (Flammenhöhe) | B2 | B2 | B2 | B2 | B2 | B2 (140 mm) | B2 (130 mm) | B2 | B3 |
| $\lambda$-Wert,[*] gemessen nach 6 Wochen bei 10° C (W/mK) | 0,0156 | 0,0165 | 0,0149 | 0,0154 | 0,0150 | - | - | 0,0150 | 0,0180 |
| Rohdichte der Prüfplatte | 35 | 36 | 37 | 37 | 36 | Handverschäumung | | 36 | 35 |
| Abriebtest (ASTM) | - | - | - | - | - | - | 1,3 % | - | - |
| Deckschicht | 80 µm Alu | 80 µm Alu | 80 µm Alu | 5-Lagen-Komplex | - | - | - | 5-Lagen-Komplex | |

1) Toluylendiamin, Gemisch aus 80 Gew.-% des 2,4- und 20 Gew.-% des 2,6-Isomeren
2) Toluylendiamin, Gemisch aus 2,3- und 3,4-Isomeren (40:60 Gew.-%)
3) EO/PO - 44,7/55,3 Gew.-Verhältnis
4) EO/PO - ——————— Verhältnis von EO/PO ca. 4 zu 5 Mol
EO   = Ethylenoxid;
PO   = Propylenoxid
(f') = kann gegebenenfalls als Cokomponente f) bei anderweitig erfindungsgemäß zusammengesetzten Polyolkompositionen dienen.

*)   (nach DIN 52612)

Beispiele
Tabelle 2

| | Bsp. 10 | Bsp. 11 | Bsp. 12 | erfindungsgemäße Komponente |
|---|---|---|---|---|
| Phthalsäure/Diethylenglykol-ester, OHZ 290 | 20 | 18,5 | - | f) |
| vicinal-TDA-EO-PO-Poly-ether, OHZ 500[3] | - | - | 30 | a) |
| Ethylendiamin-PO-Poly-ether, OHZ 630 | 7 | 10 | 15 | f) |
| vicinal-TDA[2]-EO-PO-Polyether, OHZ 470[3] | 36 | 31 | - | a) |
| Glycerin | 7 | 8 | 9 | c) |
| Dimethyl-N,N-bis-(hy-droxypropyl)-amino-methylphosphonat | - | - | 9 | b) |
| Dibrombutendiol-Epi-chlorhydrin-Polyether (OHZ 330; 32 % Br; 6,8 % Cl) | - | - | 20 | b) |
| Tris-chlorpropylphosphat | 29,7 | 32 | 0 | b) |
| Trichlorethylphosphat | - | - | 15 | b) |
| Siliconstabilisator | 0,3 | 0,5 | 1,4 | d) |
| Wasser | - | - | 0,6 | e) |
| Trichlorfluormethan | 20 | 28 | 33 | - |
| α-Methylstyrol | 0,5 | 0,5 | - | - |
| Dibutyl-zinn-dilaurat/ Triethylamin (Molverhältnis 1:1) | 0,5 | 0,5 | - | - |

Tabelle 2 (Fortsetzung)

| | Bsp. 10 | Bsp. 11 | Bsp. 12 |
|---|---|---|---|
| Dimethylcyclohexylamin | - | - | 1,1 |
| Desmodur 44-V | 120 | 128 | 150 |
| BAYER AG, D-5090 Leverkusen | | | |
| Kennzahl | 125 | 130 | 110 |
| Abbindezeit | 4 | 4 | 31 |
| (DTB-Anlage) | | | |
| Brandverhalten DIN 4102 | B2 | B2 | B2 |
| (Flammenhöhe) | 120 mm | 120 mm | 120 mm |
| $\lambda$-Wert, gemessen nach | 0,0180 | 0,0170 | 0,015 |
| 6 Wochen bei 10°C (W/mK) | | | |
| Rohdichte der Prüfplatte | 60 | 50 | 37 |

1) Toluylendiamin, Gemisch aus 80 Gew.-% des 2,4- und 20 Gew.-% des 2,6-Isomeren
2) Toluylendiamin, Gemisch aus 2,3- und 3,4-Isomeren (40:60 Gew.-%)
3) EO/PO-Verhältnis 44,7/55,3 Gew.-%
EO = Ethylenoxid;
PO = Propylenoxid
(f') = kann gegebenenfalls als Cokomponente f) bei anderweitig erfindungsgemäß zusammengesetzten Polyolkompositionen dienen.

Ansprüche

1. Polyolkomposition, enthaltend
a) mindestens 10 Gew.-%, bevorzugt 10 bis 49 Gew.-%, eines mindestens zwei Hydroxylgruppen aufweisenden Polyethers mit einer OH-Zahl von 400 bis 520, der durch Addition von Alkylenoxiden an 2,3- und/oder 3,4-Toluylendiamin erhalten worden ist.

b) mindestens 20 Gew.-%, vorzugsweise 20 bis 46 Gew.-%, bevorzugt 25 bis 45 Gew.-%, an Phosphor-und/oder Halogen-haltigen einbaufähigen und/oder nicht einbaufähigen Flammschutzmitteln,

c) 5 bis 10 Gew.-% eines mindestens zwei Zerewitinoff-aktive Wasserstoffatome aufweisenden Kettenverlängerungs-/Vernetzungsmittel vom Molekulargewicht 32 bis 299,

d) 0,1 bis 2,0 Gew.-% oberflächenaktiver Mittel,

e) 0 bis 2 Gew.-%, vorzugsweise 0,01 bis 2 Gew.-%, Wasser und

f) 0 bis 30 Gew.-%, vorzugsweise 0 bis 25,89 Gew.-%, an weiteren, höhermolekularen Polyhydroxylverbindungen des Molekulargewichts 300 bis 10 000.

2. Polyol-Komposition nach Anspruch 1, dadurch gekennzeichnet, daß der Hydroxylgruppen aufweisende Polyether durch Addition von Propylenoxid und Ethylenoxid an 2,3-und/oder 3,4-Toluylendiamin erhalten worden ist, wobei 10 bis 90 % Ethylenoxid, bevorzugt 20 bis 80 % Ethylenoxid, und 90 bis 10 %, bevorzugt 80 bis 20 % Propylenoxid, eingesetzt werden.

3. Polyol-Komposition nach Ansprüchen 1 und 2, dadurch gekennzeichnet, daß die OH-Zahl des 2,3-und/oder 3,4-Toluylendiaminpolyethers a) zwischen 410 und 520, insbesondere zwischen 450 und 500 liegt.

4. Verwendung der Polyol-Komposition nach Ansprüchen 1 bis 4 zur Herstellung von harten, flammwidrigen Polyurethan-Schaumstoffen mit einem Raumgewicht von 30 bis 70 kg/m$^3$, vorzugsweise 30 bis 45 kg/m$^3$, in Gegenwart von Aktivatoren, Treibmitteln, Polyisocyanaten, im Kennzahlenbereich 105 bis 145, bevorzugt 116 bis 145, und gegebenenfalls Füllstoffen.

5. Verwendung nach Anspruch 4, dadurch gekennzeichnet, daß als Treibmittel Trichlortrifluorethan verwendet wird.

6. Verwendung nach Ansprüchen 4 und 5, dadurch gekennzeichnet, daß als Füllstoffe Ruß und/oder Aluminiumpulver verwendet werden.

| Europäisches Patentamt | **EUROPÄISCHER RECHERCHENBERICHT** | Nummer der Anmeldung |
|---|---|---|
| | | EP 87 10 8929 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X,D | DE-A-2 017 038 (IMPERIAL CHEMICAL INDUSTRIES LTD.) * Ansprüche 1,3; Seite 3, Absätze 4,5; Beispiele 1,2,5 * --- | 1-5 | C 08 G 18/14 C 08 G 18/50 |
| A,D | GB-A-2 112 384 (TH. O. STOLZ et al.) * Ansprüche 1,2,4,7,10,11; Seite 2, Zeilen 7-21; Seite 3, Zeile 62 - Seite 4, Zeile 12 * --- | 1-5 | |
| A,D | GB-A-2 115 827 (THIRUMURTI NARAYAN et al.) * Ansprüche 1,3; Seite 1, Zeilen 18-23; Seite 2, Zeilen 19-27; Beispiel 1 * ----- | 1-6 | |
| | | | **RECHERCHIERTE SACHGEBIETE (Int. Cl.4)** C 08 G 18/14 C 08 J 9/00 |

Der vorliegende Recherchenbericht wurde für alle Patentansprüche erstellt.

| Recherchenort | Abschlußdatum der Recherche | Prüfer |
|---|---|---|
| BERLIN | 17-11-1987 | KITZMANTEL |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument
& : Mitglied der gleichen Patentfamilie, übereinstimmendes Dokument

EPA Form 1503 03 82